# EUROPEAN PATENT SPECIFICATION

(11) **EP 2 345 528 B1**
(45) Date of publication and mention of the grant of the patent: **06.01.2016**
(21) Application number: 11000350.6
(22) Date of filing: 18.01.2011
(51) Int. Cl.: B29C 70/08, B29C 70/34, B29C 70/78, B29C 70/88

(54) **Manufacturing process for composite material part comprising a functional finishing layer**
Herstellungsverfahren für Teile aus Verbundstoffmaterial mit funktionaler Oberfläche
Procédé de fabrication pour pièce de matériau composite présentant une couche fonctionnelle de finition

(30) Priority: 18.01.2010 EP 10400010
(43) Date of publication of application: 20.07.2011
(73) Proprietor: AIRBUS HELICOPTERS DEUTSCHLAND GmbH, 86609 Donauwörth (DE); Airbus Defence and Space GmbH, 85521 Ottobrunn (DE)
(72) Inventor: Weimer, Christian, 81543 München (DE); Bätge, Nikolaus, 82041 Deisenhofen (DE); Parlevliet, Patricia, 81667 München (DE); Luinge, Hans, 81545 München (DE); Wachinger, Georg, 83026 Rosenheim (DE)
(74) Representative: GPI & Associés

(56) References cited:
- EP-A1- 1 625 929
- WO-A1-2004/062409
- WO-A1-2008/119942
- WO-A2-2004/067246
- WO-A2-2007/048141
- FR-A1- 2 486 872
- GB-A- 2 105 653
- US-A1- 2002 108 704
- US-A1- 2004 046 291

## Description

The present invention relates to the general technical field of manufacturing integral parts comprising fibre- and resin-based reinforcements. For example these parts are obtained by moulding a composite material comprising reinforcement fibres, fabrics or textiles and an impregnation matrix. These parts are for example meant for the aeronautics industry, aerospace industry, automotive industry or the wind-energy industry.

Impregnation matrix is understood to be any type of polymer resin or mixture of polymer resins with low viscosity whose solidification results from polymerization. Low viscosity is needed in order that any kind of infusion or injection process is possible. The viscosity of the matrix in the Prepreg technology can be higher.

The term "fibres" indicates hereinafter all types of structural fibres such as carbon fibres, glass fibres or aramid fibres, polyethylene, basalt or natural fibres.

The known moulding processes are not described in detail herein.

More specifically the invention is related to Liquid Composite Moulding processes also called LCM among which various processes are known such as for example Vacuum Assisted Resin Transfer Moulding or VARTM, Resin Transfer Moulding or RTM, Liquid Resin Infusion or LRI, Vacuum Assisted Process or VAP, Seeman Composite Resin Infusion Moulding Process or SCRIMP or any other method, such as Combined Prepreg Infusion or CPI, Same Qualified Resin Transfer Moulding or SQRTM as well as Controlled Atmospheric Pressure Resin Infusion or CAPRI. The invention is also suitable for Prepreg technology. These processes often have at least one step in common consisting of impregnating at least one layer of dry reinforcement fibres with a matrix. Alternatively, some processes are based on the use of preimpregnated preforms or Prepregs which do not require a step of injection/infusion of such a matrix.

A polymer structure reinforced with fibres can be manufactured according to various processes some of which are given below.

One of these processes consists in laying-up and curing prepreg in an autoclave, a press or an oven, under the influence of processing parameters such as pressure and heat.

Another of these processes is based on an infusion of dry preforms, also called (LCM) where solidification of the polymer matrix can occur in a hot press, in an oven, in an autoclave, via induction or in a Quickstep^{™} machine.

Additionally, some thermoplastic materials have been found to adhere well to dissimilar materials such as epoxies, polyamides or other thermoplastics. The bonding is either caused by a partial dissolution of the thermoplastic material or layer in a resin or by any other physical or chemical interaction.

The composite parts resulting from the known processes often do not have satisfactory mechanical, physical and/or chemical functionalities and properties, notably surface. Depending of course on the field of application, it is necessary in many cases to use many finishing steps which are often burdensome and costly. This is for example the case when one wishes to provide the composite part with lightning strike protection or for example erosion protection. This is also the case for example when one wants to make the composite part wear resistant or when one wants to provide said part with additional functional coatings for example relating to aesthetics or aerodynamics, or as a preparation for painting, joining, easy de-molding or electrical bonding.

For example, manufacturing processes consisting of using for example a thermoplastic sheet or thermoplastic powder placed at the interface of primary parts constituting an integral structure to be impregnated are known from the document EP1317501. This thermoplastic sheet influences the properties of the impregnation matrix so as to enhance its diffusion in the fibre layer. These thermoplastic sheets do not allow optimizing the surface mechanical and physical properties of such composite parts.

In the known processes, additional steps are necessary, such as using a gel coat for surface finishing, or surface cleaning and surface preparation for bonding operations.

The document EP 1625929 A1 discloses a mould for fabricating a moulded product comprising a laminate of a thermoplastic surface material and a structural material. The mould comprises a closed, air impervious first mould surface for shaping the surface material and an air permeable liner which is located in relation to the mould. The liner is adapted such that upon applying an in-mould vacuum pressure to the liner, the surface material contacts the second mould surface and conforms to the shape of the mould.

The document FR2486872 discloses a self supporting element for the interior of a motor vehicle, including a panel and a method of manufacture.

The document WO2007048141 discloses methods for applying protective sheets to composite articles. According to these methods and resulting composite articles, a protective sheet is applied to at least a portion of an exterior surface formed from a composite material and where protection is desired. At least one exterior surface of the composite article to be protected can be integrally formed in the presence of the protective sheet.

The document WO2004062409 discloses a lightweight, shock-resistant and tension-proof safety helmet manufactured at a low cost. The safety helmet includes a shell, which is manufactured by molding a liner using a thermoplastic resin, covering the outside of the liner with a reinforced fiber sheet, preparing a mold, disposing the liner upside down on a concave molding side of the mold, injecting a thermosetting resin between the liner and the molding side, hardening the thermosetting resin, and detaching the hardened thermosetting resin from the mold; and a cushion pad attached to the inside of the liner.

The document US2004046291 discloses a process of transferring resin into reinforcing fiber material used in the manufacture of composite articles. A first step in the method involves positioning at least one layer of the reinforcing fiber material on the surface of an open mold. The reinforcing fiber material typically consists of glass, carbon, linear polyethylene, polypropylene, and polyester fibers. Subsequently, a sealant layer is applied in liquid form over the reinforcing fiber material to create an airtight chamber encapsulating the reinforcing fiber material between the sealant layer and the mold. After the sealant layer is allowed to cure, a vacuum pressure is applied to the airtight chamber to draw resin through the reinforcing fiber material. For example, the resin can be an epoxy, polyester or vinyl ester resin; According to one aspect of the invention, prior to the first step of positioning the reinforcing fiber material on the surface of the mold, an optional gel coat layer can be applied to the mold surface.

Consequently the objective of the present invention is to remedy the aforementioned disadvantages and propose a new manufacturing process for reinforced and optimized composite parts especially as it relates to surface properties thereof.

Another objective of the present invention is to propose a new manufacturing process which does not require implementing finishing operations following the final solidification step of the reinforced composite part in order to provide this part with the required functionalities and properties.

Another objective of the present invention is to propose a new particularly simple and reliable manufacturing process for a reinforced and optimized composite part with a limited number of steps to be implemented.

Another objective of the present invention is to propose a new particularly simple and reliable manufacturing process for a reinforced and optimized composite part with a limited number of elements necessary for its implementation and also a limited number of elements to be disposed or recycled.

Another advantage of the manufacturing process conforming to the invention, resides in obtaining an easy demoulding of the composite part.

The objectives of the invention are achieved by a manufacturing process according to claims. Preferred embodiments are presented with dependent subclaims.

According to the invention a manufacturing process for a composite part having a reinforcement structure comprising at least one reinforcement layer based on fibre, fabric or textile reinforcement and at least one impregnation matrix impregnating the reinforcement structure, consisting of providing the reinforcement structure with a functional finishing layer on at least one of the surfaces of said reinforcement structure,

The objectives of the invention are achieved using a manufacturing process for a composite part having a reinforcement structure comprising at least one reinforcement layer based on fibre, fabric or textile reinforcement and at least one impregnation matrix impregnating the reinforcement structure, consisting of providing the reinforcement structure with a functional finishing layer comprising a functional thermoplastic sheet on at least one of the surfaces of said reinforcement structure,
characterized in that it consists of:
- using a mould whose shape corresponds to the future composite part,
- arranging the reinforcement structure inside the mould and covering the reinforcement structure with the functional thermoplastic sheet,
- sealing the mould by the functional thermoplastic sheet,
- heating the reinforcement structure until reaching the injection/infusion temperature of the impregnation matrix, so that the composite part comprises the thermoplastic sheet,
- injecting or infusing the impregnation matrix in the mould so as to impregnate the reinforcement structure, so that the composite part comprises the thermoplastic sheet,
- next solidifying the resulting composite part by subjecting it to the final solidification temperature for a set time,
- and extracting the composite part provided with a functional finishing layer from the mould.

According to another implementation example, the process conforming to the invention consists in using a closed mould and injecting the matrix to the inside of the sealed mould with pressure.

According to an implementation example, the process conforming to the invention consists of using a preimpregnated reinforcement structure and/or a Prepreg, thereby avoiding implementing the step of injecting/infusing the impregnation matrix.

According to another implementation example, the process conforming to the invention consists of using a functional thermoplastic sheet whose softening temperature lies in the range of -50°C and 250°C, preferably in the range of 80°C -250°C, most preferably is 120°C-250°C.

According to an implementation example, the process conforming to the invention consists of using a thermoplastic sheet, some constituent materials of which are chosen among materials such as PSU, PPSU, PES, SRP, polyimides, polyamides, poly(etherimide) PEI, phenoxy and copolymers or materials likely to dissolve in caprolactam, polysulfones, polyether sulphides or polyetherimides.

According to an implementation example, the process conforming to the invention consists of using a thermoplastic sheet having a thickness included between 0.02 mm and 1 mm, preferably 0.02-0.4 mm, most preferably 0.02-0.05 mm.

According to an implementation example, the process conforming to the invention consists of shaping the thermoplastic sheet that shapes the future composite part. Thus any risk of appearance of folds or irregularities in the outer surface of the composite part is avoided.

According to an implementation example, the process conforming to the invention consists of using materials making up the thermoplastic sheet which comprise at least one material which expands under the effect of heat. Such an expansion makes it possible to improve the joining between the parts of the reinforcement structure and to improve the finishing layer. Self-healing properties of the finishing layer can so be obtained.

According to an implementation example, the process conforming to the invention consists of using materials making up the thermoplastic sheet which comprise at least one electrically conductive material. For this purpose the thermoplastic sheet can comprise carbon nanotube type particles or other metallic additives. As a variant, the thermoplastic sheet can also be associated with a metallic mesh type structure. This is particularly interesting for achieving protection against lightning strike and securing the electrical bonding.

According to an implementation example, the process conforming to the invention consists of using materials making up the thermoplastic sheet which comprise at least one non-inflammable or flame retardant material. Such material makes it possible to improve the flame retardancy of the composite part

According to an implementation example, the process conforming to the invention consists of using an impregnation matrix for the reinforcement structure whose solidification temperature is included between 120 °C and 400°C, preferably 120°C - 330°C.

According to an implementation example of the process conforming to the invention, the impregnation matrix is a thermosetting resin chosen among a family of products comprising epoxies (RTM6), polyimides (BMI) or cyanate esters.

According to another implementation example of the process conforming to the invention, the impregnation matrix is a thermoplastic resin system chosen among a family of products comprising polyamides (anionic polyamide-6, PA11), polyesters (cyclic PBT), liquid crystalline polymers, polyketones or polysulfones.

According to an implementation example, the process conforming to the invention consists of subjecting the impregnated reinforcement structure to a vacuum or to a pressure greater than atmospheric pressure during the final solidification stage.

An advantage of the process conforming to the invention, resides in providing new properties and/or functionalities for the surface of the composite part and to do so via the materials making up the thermoplastic sheet. By way of examples, high hardness, scratch resistance, good adhesion with underlying matrix and dirt repelling properties can be obtained. The thermoplastic sheet according to the invention encompasses also thermoplastic materials with additives such as nano-particles, flame retardants or pigments.

Another advantage of the manufacturing process conforming to the invention lies in the simplicity thereof and in the limited number of steps for implementation thereof.

Another advantage of the manufacturing process conforming to the invention lies in providing the surface of the composite part with new properties and/or functionalities and doing so without implementing additional manufacturing steps or at least with less complicated steps than the steps of the known methods.

Another advantage of the manufacturing process conforming to the invention is obtained unexpectedly by the contribution of new properties and/or functionalities to the surface of the composite part, without substantialiy modifying the implementation of known manufacturing processes. In particular, the injected resin solidification cycle is not altered by the use of a functional thermoplastic sheet.

Another advantage of the manufacturing process conforming to the invention, resides in obtaining a composite part retaining a satisfactory finish on the surface, thereby avoiding having to lay out additional coatings on said part.

Another advantage of the manufacturing process conforming to the invention resides in obtaining a composite part having a finish surface on which a layer of varnish or paint can be directly deposited without prior treatment of said finish surface.

Another advantage of the manufacturing process conforming to the invention resides in obtaining a composite part having a finishing surface giving the composite part an improved impact resistance.

Another advantage of the manufacturing process conforming to the invention resides in obtaining an easy de-moulding of the composite part.

The functional thermoplastic sheet comprises at least one layer based on film, fibre, fabric or textile of thermoplastic material with/without additional thermoplastic reinforcement material and optional embedded means, which is explained in more detail below. In this context, embedded means also comprises means attached to the thermoplastic sheet by gluing or otherwise fixing or connecting.

Due to the composition of thermoplastic materials and/or embedded means, the thermoplastic sheet exhibits properties which improve its functionality compared to known thermoplastic films: e.g. expandability, weldability, impact-resistance, fire resistance, electrical conductivity, heat transfer, paintability and/or detaching is improved. This distinguishes the functional thermoplastic sheet from thermoplastic coating material in the prior art (e.g. EP1625929).

Furthermore, the functional thermoplastic sheet replaces manufacturing steps during production and/or during finishing of a composite part. Also, the composition of thermoplastic materials and/or embedded means greatly simplifies, for example joining of composite parts, attaching further means during the manufacturing process and/or in a post-manufacturing process of the composite part. This has also already been explained above and is described in more detail in the following.

The functional finishing layer comprises the functional thermoplastic sheet and is integrally formed with the reinforcement structure. The functional finishing layer exhibits at least all properties of the functional thermoplastic sheet. It is at least partially or locally bonded to the reinforcement structure.

According to an implementation example, the thermoplastic sheet, comprises some constituent materials of which are chosen among materials such as PSU, PPSU, PES, SRP, polyimides, polyamides, poly(etherimide) PEI, phenoxy ,copolymers and/or materials likely to dissolve in at least one of: caprolactam (polycaprolactam or polyamide), epsilon caprolactam, epoxy components, bismaleimides and components thereof, cyanate esters, polyesters, vinylesters, benzoxazines, polysulfones, polyether sulphides or polyimide-based resin systems or the like and components thereof with/without the particles or other additives needed for the functionality described above.

As already mentioned above, thermoplastic polymers (thermoplastics) are amorphous, crystalline or preferably semi-crystalline thermoplastics. Accordingly, the softening temperature lies above glass temperature for amorphous thermoplastics and for semi-crystalline thermoplastics. For highly crystalline thermoplastics, the softening temperature corresponds to the crystallization temperature.

The softening temperature can be as low as -50°C up to 200°C, e.g. wet polyamide POM can have a softening temperature from -70°C - 220°C, polyetherimid even up to 217°C.

Thermoformable resin softens when heated at a specific temperature. Also, thermosetting materials such as those from a family of products comprising epoxies, cyanate esters and polyimides can have thermoformable properties.

According to an implementation example of the invention, the functional thermoplastic sheet comprises particles, e.g. metal particles of Cu, Ag, Fe alloys thereof, and/or steel and the like, and/or aluminium oxide and the like. The particles can be nanoparticles, as well as non-metal (nano)particles, such as carbon nanotubes, graphene, carbon nanosphere chains or nanoclay. E.g. nanoclay particles improve the wear rate, the rate of moisture absorption, fire resistance and hardness of the functional thermoplastic sheet. Also, carbon nanotubes, graphenes and/or carbon nanosphere chains, for example, improve mechanical properties like stiffness and strength of the functional thermoplastic sheet.

The metal particles are electrically conductive and provide inductive heating capability. The particles improve the wear resistance, the electric conductibility, as well as the de-moulding of the composite part from the mould and all other properties mentioned above.

According to an implementation example of the invention, the functional thermoplastic sheet comprises at least one electrically conductive path suitable for data transfer, electrical conductivity, heat conductivity or sensing transfer. The sensing transfer also comprises connection of electrical systems, impact sensitivity through change in electrical resistivity of the electrical configuration of the functional thermoplastic sheet.

The electrically conductive path can be embedded in or on the surface of the functional thermoplastic sheet. The electrically conductive path is e.g. a metallic wire, metallic strip, metallic tags or any other conductive material, or a percolated network of conductive particles. The diameter of the metallic wire is 0,001-0,5 mm, preferably 0,001-0,2 mm, most preferably 0,001-0,005 mm. The thickness of the metallic strip is as thin as 0,01-0,5mm, preferably 0,01-0,2mm, most preferably 0,01-0,05 mm. The width of the metallic strip is e.g. 1-5 cm mm. The diameter of the particles in the percolated network is 5-1000 nm, preferably 10-100 nm, most preferably 20-100 nm.

The particles used comprise all metals having a melting point above softening temperature or above injection/infusion temperature of the impregnation matrix, e.g. Cu, Ag, Fe, alloys thereof and/or steel and the like, and/or aluminium oxide and the like.

The electrically conductive path can be embedded in or on the surface of the functional thermoplastic sheet. This path can be used for data transfer, e.g. to or from one or more sensors arranged inside or at the surface of the composite part. Also, the conductive path can be used to transfer electrical current to electrical components, sensors, electronic tags, etc inside or outside the composite part. Alternatively, heat can be transferred via the conductive path, so that the composite part maintains a predefined temperature, if desired. This can be crucial for composite parts such as rotor blades and can be used for de-icing or anti-icing.

According to an implementation example of the invention, the sensors generally include all kind of sensors. For example, if the composite part is a rotor blade or wind turbine blade such sensors include pressure sensors sensing the pressure at the suction side or pressure side of the blade. Also stress forces or twist of the composite part, e.g. the rotor blade, can be sensed and the data transferred via the electrically conductive path to a controller, for example. Also temperature sensors such as thermistors can be used. The sensors can be embedded in the functional thermoplastic sheet, between the functional thermoplastic sheet and the composite or on the outer surface of the functional thermoplastic sheet. Alternatively, means for simplified adjustment of optional sensors can be provided on the inner/outer surface of the functional thermoplastic sheet.

According to an implementation example of the invention, the functional thermoplastic sheet comprises at least one energy director for ultrasonic, induction, electric resistance. The at least one energy directors can be all kind of means for heating the surface to enable a joint by fusion bonding which occurs due to melting of the surface. It can be arranged at the outer or inner surface of the functional thermoplastic sheet.

Such energy directors highly improve the weldability of the functional thermoplastic sheet (and thus functional finishing layer) as the energy necessary for welding is focussed at the region where the at least one energy director is located. Complex structures can be composed by joining several composite parts, thus reducing the complexity of the geometry of the composite parts themselves. The composite parts are usually joinded by ultrasonic, induction, resistance or microwave welding.

Metallic wires, such as Cu, Ag, Fe, alloys thereof, and/or steel wires and the like or conductive non-metallic particles such as CNTs and/or aluminium oxide and the like are used as energy director. The wire can be arranged in a shape of a square and/or in form of a round/square spiral or in the shape of a triangle. The thickness of the wire ranges from 0.01 - 1 mm. Other energy directors can consist of polymeric local inhomogeneities (e.g surface roughness with locally higher thermoplastic content) of various types, such as triangular cross-sections, small ridges (e.g several wires placed alongside each other) with 0.1 - 1 mm thickness, triangular shape of 5 but preferably 2 mm² cross-section and lower.

For ultrasonic welding high-frequency ultrasonic acoustic vibrations are locally applied to the composite parts being held together under a mechanical pressure. An energy director embedded with the functional thermoplastic sheet (and thus with the functional finishing layer) of one composite part contacts the functional finishing layer of the other composite part, which does not necessary contain an energy director at the interface of the composite parts. The ultrasonic energy melts the point contact or interface surface between the functional finishing layers or the functional finishing layer and a thermoplastic covering sheet (if the other composite part is as in the prior art, i.e. without the functional finishing layer) creating a joint.

For induction welding an energy director comprises electrically conductive or ferromagnetic compounds. These can be the metallic particles or other conductive material. A high-frequency electromagnetic field acts on the electrically conductive or ferromagnetic compounds, which absorb energy from the induction coil and become hot, thereby heating the surrounding material which melts creating a joint between the two composite parts.

For electric resistance welding heat from the weld is generated by the resistance of the welding current of an energy director. The welding temperatures also depend on the size of the energy director. At the point of most electrical resistance, i.e. interface of the composite parts, small pools of molten metal are formed when a high current passes through the metal wire or tags of the ferromagnetic compounds of the energy director. The interface is metal mesh impregnated with thermoplastic.

Energy directors are also used for vibration welding, where thermoplastic brackets can be used.

In the welding processes mentioned above the functional finishing layer of the composite parts can be joined completely or at least partially. Also local joining of the surfaces of the composite parts can be provided when a local bonding is required, e.g. brackets are arranged on a surface of the functional thermoplastic sheet where only locally the functional sheet is required (in this case the functional finishing layer is joined with the brackets).

According to an implementation example of the invention, a functional thermoplastic sheet comprises at least two layers of thermoplastic material and/or co-extruded thermoplastic material or least one upper layer and at least one lower layer.

The at least one upper layer comprises at least one material with a good adhesion to the infusion resin, e.g., PSU, PPSU, PES, SRP, polyimides, polyamides, poly(etherimide) PEI, phenoxy, copolymers and/or materials likely to dissolve in at least one of: caprolactam (polycaprolactam or polyamide), epsilon caprolactam, epoxy components, bismaleimides and components thereof, cyanate esters, polyesters, vinylesters, benzoxazines, polysulfones, polyether sulphides or polyimide-based resin systems or the like and components thereof with/without the particles mentioned above or other additives needed for the functionality described above.

The at least one lower layer comprises at least one of: PEEK, PPS PEKK, self-reinforced polymers or a combination thereof or another material with a low adhesion to the infusion resin with/without the particles mentioned above or other additives needed for the functionality described above.

The additives comprise calcium carbonate, elastomer particles (e.g core shell rubbers for impact resistance), titanium oxide (increasing the UV resistance, stiffness or strength).

The at least one upper layer is in contact to the reinforcement and is partially soluble in the impregnating resin or dissolves with preimpregnated reinforcement or Prepreg material when heated. The at least one lower layer has excellent mechanical and chemical resistance which are retained also at high temperatures. It is highly wear resistant, provides excellent impact behaviour, fire resistance and has improved paintability. Also, de-moulding is improved as the lower layer is more easily detachable from the mould.

According to an implementation example of the invention, the at least two layers comprise co-extruded layers only. For a functional thermoplastic sheet comprising more than two layers, co-extruded layers can be combined with one or more layers described above. The co-extruded layers also comprise the materials described for the at least one upper layer or the at least lower layer.

According to an implementation example of the invention, the outer or outermost layer of the at least one lower layer can comprise at least thermoplastic materials with a lower softening temperature, thus enabling easier welding and less heat input to the interface of the composite parts to be bonded. Fast heating and a higher heating rate can also be achieved by heating of the additives as mentioned above. The outer or outermost layer can have a low melt viscosity, so that less pressure is needed to provide the bond.

Due to the improved expandability the functional thermoplastic sheet provides improved tolerance capabilities, e.g. a non-intended misalignment between the reinforcement structure and the mould is compensated by the functional thermoplastic sheet. The misalignment can be as high as 5 mm. The improved expandability of the functional thermoplastic sheet provides additive pressure between 0.01-5 bar.

According to an implementation of the invention, the at least one electrically conductive path is embedded in at least one upper layer of the functional thermoplastic sheet, so that it substantially abuts the reinforcement structure. The layer in between the carbon reinforcement and the electrically conducting layer of the co-extruded sheet, functions as a insulator to prevent short-circuiting between the conductive layer and the conductive carbon fibre reinforcement.

A plurality of electrically conductive paths is embedded in the multiple layers of the functional thermoplastic sheet, e.g. when heat is to be transferred multiple paths spreading along the same route can provide increased heat capacity at desired parts of the composite part. Also, data transfer can be improved by multiple paths in multiple layers of the functional thermoplastic sheet.

According to an implementation of the invention, the at least one energy director is embedded at the outermost surface of the at least one lower layer, according to the size of the welding director or the welding process.

It is also possible to remove the functional finishing layer, if desired, by grinding or by heat addition, such that the thermoplastic layer(s) melts, or preferably softens so that the low mechanical strength remaining provide easy removal off the reinforcement structure.

The invention and its advantages described above will appear with greater detail in conjunction with the description which follows with execution and implementation examples, given as illustration and without limitation, with reference to the attached figures which shows:
- Figures 1, 2 and 3 schematically illustrate steps from a first example which is not part of the invention for making composite material parts.

- Figures 4, 5 and 6 schematically illustrate steps of implementation of the manufacturing process conforming to the invention for making composite material parts.
- Figures 7, 8 and 9 schematically illustrate steps from a further example of implementation of the manufacturing process conforming to the invention for making composite material parts.

The identical structural and functional elements, which are shown in several different figures or illustrations, are given one single numeric or alphanumeric reference.

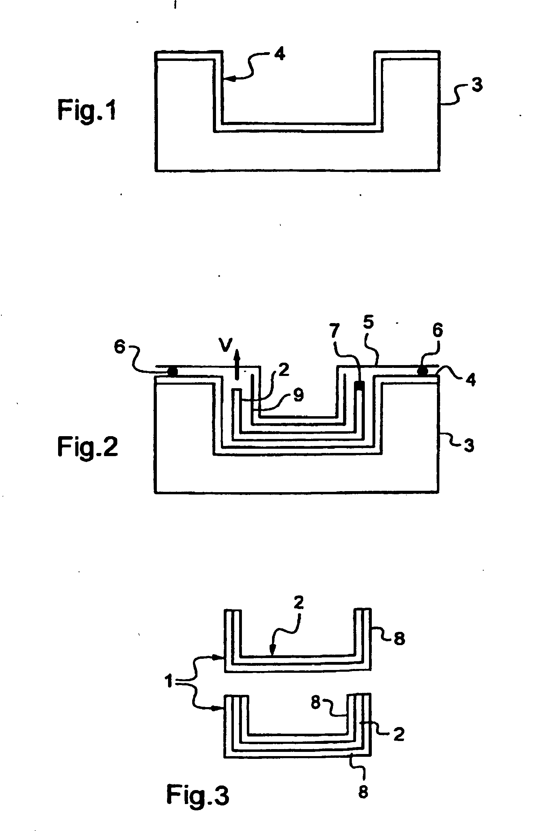

The figures 1 to 3 schematically illustrate an implementation variant of the manufacturing process which is not part of the invention. This process consists of manufacturing a composite part 1 having a reinforcement structure 2 comprising at least one reinforcement layer based on fibre, fabric or textile reinforcement and at least one impregnation matrix impregnating the reinforcement structure 2.

A first step a1 consists of using an open mould 3 whose shape corresponds to the future composite part 1.

The second step a2 consists of placing a functional thermoplastic sheet 4 in the open mould 3 as shown in Figure 1.

Figure 2 illustrates, in particular a third step a3 consisting of arranging the reinforcement structure 2 on the functional thermoplastic sheet 4 inside the open mould 3.

According to a fourth step a4, the manufacturing process consists in sealing the open mould 3 with a vacuum sheet 5. Such a vacuum sheet is already known.

A fifth step a5 consists of applying a vacuum V to the inside of the sealed mould 3 and heating the reinforcement structure 2 until reaching the impregnation temperature of the impregnation matrix. Joints 6 are placed between the vacuum sheet 5 and the functional thermoplastic sheet 4 covering the inside surface of the open mould 3.

Next a step a6 consists of impregnating the impregnation matrix in the mould 3 so as to impregnate the reinforcement structure 2. An injection port 7 makes it possible to impregnate the matrix directly between the vacuum sheet 5 and the functional thermoplastic sheet 4.

A step A7 consists of next solidifying the resulting composite part 1 by subjecting it to the final solidification temperature for a set time such as 120°C, 180°C, 250°C or room temperature.

A step a8 consists of extracting the composite part 1 provided with a functional finishing layer 8 from the mould 3. An execution example of such a composite part 1 is shown in Figure 3.

Therefore the process consists of providing the reinforcement structure 2 with a functional finishing layer 8 on at least one of the surfaces of said reinforcement structure 2.

According to an implementation, the manufacturing process consists of heating and locally melting the functional thermoplastic sheet 4, after arrangement in the open mould 3, so as to obtain a bond with the reinforcement structure 2. The structure can be made up of an assembly of reinforcement layers which are kept in position by the bond with the functional thermoplastic sheet 4.

According to an implementation the process of arranging a second functional thermoplastic sheet 9 between the reinforcement structure 2 and the vacuum sheet 5 before sealing the open mould 3. A second implementation example of the composite part 1 will be provided with a functional finishing layer 8 on each of the surfaces thereof, as illustrated in figure 3.

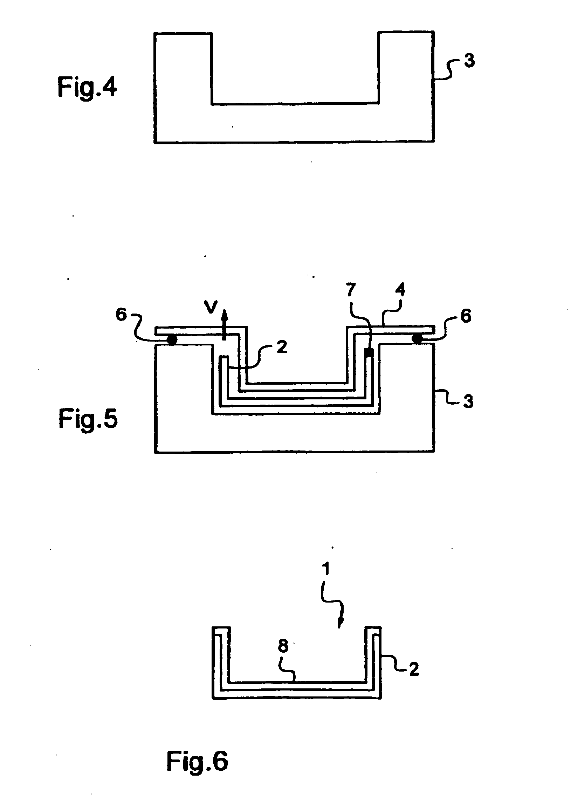

The figures 4 to 6 schematically illustrate the implementation of the manufacturing process conforming to the invention. This process consists of manufacturing a composite part 1 having a reinforcement structure 2 comprising at least one reinforcement layer based on fibre, fabric or textile reinforcement and at least one impregnation matrix impregnating the reinforcement structure 2.

According to a first step b1, the process consists of using an open mould 3, shown in figure 4, whose shape corresponds to the future composite part 1.

According to a second step b2, illustrated in Figure 5, the process consists of arranging the reinforcement structure 2 inside the open mould 3.

According to a third step b3, the process consists of sealing the open mould with a functional thermoplastic sheet.

Next according to a fourth step b4, the process consists of applying a vacuum V to the inside of the sealed mould 3 and heating the reinforcement structure until reaching the impregnation temperature of the impregnation matrix.

Next, according to a fifth step b5, the process consists of injecting the impregnation matrix in the mould 3 so as to infuse the reinforcement structure 2.

A step b6 consists of next solidifying the resulting composite part 1 by subjecting it to the final solidification temperature for a set time.

Finally a step b7 consists of extracting from the mould 3 the composite part 1 provided with a functional finishing layer 8 on its upper surface as is shown in figure 6.

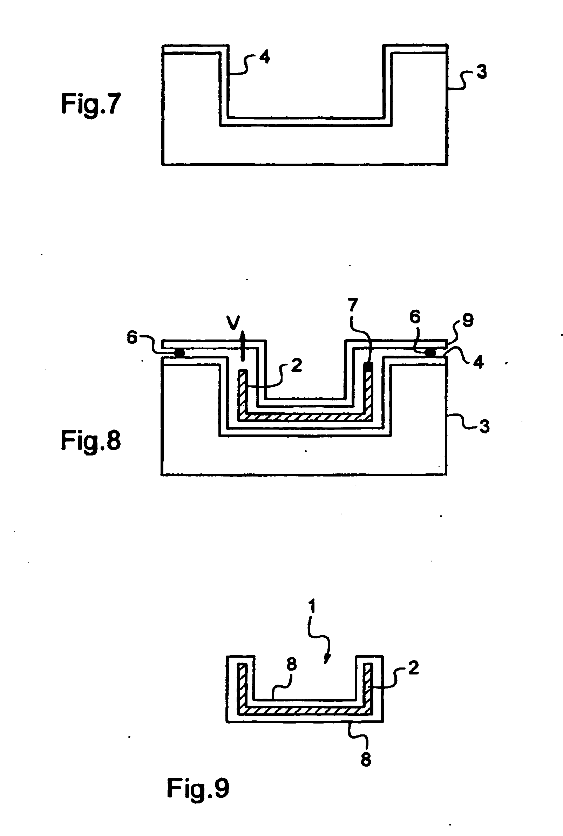

According to a further implementation example conforming to the invention, illustrated in figures 7 to 9, the manufacturing process consists of using the second functional thermoplastic sheet 9 for forming and replacing the vacuum sheet 5 as can be seen in figure 8. The second functional thermoplastic sheet 9 makes it possible to seal the open mould 3. The functions of the vacuum sheet 5 are then replaced by this second functional thermoplastic sheet 9.

Furthermore, the composite part 1 will be provided with a functional finishing layer 8 on each of its surfaces, as is shown in figure 9.

The other steps of the manufacturing process remain unchanged and are not described again.

According to a further implementation example conforming to the invention, not shown in the figures, the manufacturing process consists of using a preimpregnated reinforcement structure 2 or a Prepreg, thereby avoiding implementing the step of injecting the impregnation matrix. The other steps however remain unchanged.

Unsurprisingly, the present invention is subject to several variations in terms of its implementation. Although several execution and implementation modes have been described, it is clear that identifying all possible modes exhaustively is inconceivable. It is, of course, possible to replace any feature or step described above with an equivalent feature or step and still remain within the scope of the present invention, as depicted by the claims.

## Claims

1. Manufacturing process for a composite part (1) having a reinforcement structure (2) comprising at least one reinforcement layer based on fibre, fabric or textile reinforcement or preimpregnated reinforcement and/or Prepreg material, wherein the reinforcement structure (2) is provided with a functional finishing layer comprising an expandable, weldable, impact-resistant, fire resistant, electrical conductive, heat transferring, paintable and/or detachable thermoplastic sheet (4), said functional finishing layer (8) being integrally formed on at least one of the surfaces of said reinforcement structure (2), the process comprising the following steps:
- (b1) using a mould (3) whose shape corresponds to the future composite part (1),
- (b2) arranging the reinforcement structure (2) inside the mould (3) and covering the reinforcement structure (2) with the expandable, weldable, impact-resistant, fire resistant, electrical conductive, heat transferring, paintable and/or detachable thermoplastic sheet (4); the process being **characterised in that** it further comprises the following steps:
- (b3) sealing the mould (3) by the expandable, weldable, impact-resistant, fire resistant, electrical conductive, heat transferring, paintable and/or detachable thermoplastic sheet (4),
- (b4) heating the reinforcement structure (2) until reaching the injection/infusion temperature of at least one impregnation matrix, so that the composite part (1) comprises the thermoplastic sheet (4);
- (b5) if a non-impregnated reinforcement or non-Prepreg material is used, injecting or infusing the at least one impregnation matrix in the mould (3) so as to impregnate the reinforcement structure (2), and so that the composite part (1) comprises the thermoplastic sheet (4);
- (b6) next solidifying the resulting composite part (1) by subjecting it to the final solidification temperature for a set time,
- and (b7) extracting the composite part (1) provided with the functional finishing layer (8) from the mould (3).

2. Process according to claim 1,
wherein a second functional thermoplastic sheet (9) is placed in the mould (3) before arranging the reinforcement structure (2).

3. Process according to any one of the previous claims,
wherein the softening temperature of the functional thermoplastic sheet (4, 9) lies in the range of -50[deg.]C and 250[deg.]C, preferably in the range 80[deg.]C-250[deg.]C and most preferably in the range 120[deg.]C-250[deg.]C.

4. Process according to any one of the previous claims, wherein a functional thermoplastic sheet (4, 9) comprises some constituent materials of which are chosen among materials such as polyimides, polyamides or materials likely to dissolve in caprolactam, polysulfones, polyether sulphides or polyetherimides.

5. Process according to any one of the previous claims, wherein a functional thermoplastic sheet (4, 9) has a thickness included between 0,02 mm and 1 mm, and preferably between 0.02 mm and 0.4 mm and most preferably between 0.02 mm and 0.05 mm.

6. Process according to any one of the previous claims, wherein the functional thermoplastic sheet (4, 9) is conformed to the shape of the future composite part (1).

7. Process according to any one of the previous claims, wherein materials making up the functional thermoplastic sheet (4, 9) comprise at least one material which expands under the effect of heat.

8. Process according to any one of the previous claims, wherein materials making up the functional thermoplastic sheet (4, 9) comprise at least one electrically conductive material and/or at least one non-flammable or flame retardant material.

9. Process according to any one of the previous claims, wherein the solidification temperature of an impregnation matrix solidification temperature is included between 120[deg.]C and 400[deg.]C and preferably between 120[deg.]C and 330[deg.]C.

10. Process according to any one of the previous claims, wherein the impregnation matrix is a thermosetting resin chosen among a family of products comprising epoxies, cyanate esters or polyimides and/or the impregnation matrix is a thermoplastic resin system chosen from the family of products comprising polyamides (anionic polyamide-6, PA11), polyesters (cyclic PBT), liquid crystal polymers, polyketones or polysulfones.

11. Process according to any one of the previous claims, **characterized in that** it consists of subjecting the impregnated reinforcement structure (2) to a vacuum or to a pressure greater than atmospheric pressure during the final solidification stage.

12. Process according to any of the preceding claims, wherein the expandable, weldable, impact-resistant, fire resistant, electrical conductive, heat transferring, paintable and/or detachable thermoplastic sheet (4, 9) comprises at least two layers of thermoplastic material and/or co-extruded thermoplastic material, said at least two layers comprising at least one upper layer in contact to the reinforcement and comprising at least one material of epoxy, PSU, PPSU, PES, SRP, polyimides, polyamides, poly(etherimide) PEI, phenoxy ,copolymers and/or materials likely to dissolve in at least one of: caprolactam (polycaprolactam or polyamide), epsilon caprolactam, epoxy components, bismaleimides and components thereof, cyanate esters, polyesters, vinylesters, benzoxazines, polysulfones, polyether sulphides or polyimide-based resin systems and components thereof, and at least one lower layer in contact to the mould and comprising at least PEEK, PPS PEKK, self-reinforced polymers or a combination thereof.

13. Process according to claim 12, wherein the at least one electrically conductive path is embedded in at least one upper layer of the thermoplastic sheet (4, 9), so that it substantially abuts the reinforcement structure (2).

14. Process according to claim 1, wherein the thermoplastic sheet (4, 9) comprises at least one energy director for ultrasonic, induction, resistance and/or microwave welding.

15. Process according to claim 12, wherein the at least one energy director is embedded in at least one upper layer or at least one lower layer of the thermoplastic sheet (4, 9).

## Patentansprüche

1. Herstellungsverfahren für ein Teil aus Verbundstoffmaterial mit einer Verstärkungsstruktur (2), die mindestens eine Verstärkungsschicht auf der Grundlage von einer Faser-, Gewebe- oder Stoffverstärkung oder einer vorimprägnierten Verstärkung und/oder von Prepreg-Material aufweist, wobei die Verstärkungsstruktur (2) mit einer funktionalen Deckschicht versehen ist, die eine ausdehnbare, schweißbare, schlagunempfindliche, feuerbeständige, elektrisch leitende, wärmeübertragende, lackierbare und/oder ablösbare thermoplastische Folie (4) aufweist, wobei die funktionale Deckschicht (8) auf mindestens einer der Oberflächen der Verstärkungsstruktur (2) aufgepresst ist, wobei das Verfahren folgende Schritte aufweist:
- (b1) Verwenden einer Gussform (3), deren Form der Form des zukünftigen Teils (1) aus Verbundmaterial entspricht,
- (b2) Anordnen der Verstärkungsstruktur (2) in der Gussform (3) und Bedecken der Verstärkungsstruktur (2) mit der ausdehnbaren, schweißbaren, schlagunempfindlichen, feuerbeständigen, elektrisch leitenden, wärmeübertragenden, lackierbaren und/oder ablösbaren thermoplastischen Folie (4), wobei das Verfahren **dadurch gekennzeichnet ist, dass** es darüber hinaus die folgenden Schritte aufweist:
- (b3) Versiegeln der Gussform (3) mit der ausdehnbaren, schweißbaren, schlagunempfindlichen, feuerbeständigen, elektrisch leitenden, wärmeübertragenden, lackierbaren und/oder ablösbaren thermoplastischen Folie (4),
- (b4) Aufheizen der Verstärkungsstruktur (2) bis die Einspritz-/ Eingießtemperatur mindestens einer Imprägnationsmatrix erreicht ist, sodass das Teil (1) aus Verbundstoffmaterial die thermoplastische Folie (4) einschließt,
- (b5) wenn eine nicht-imprägnierte Verstärkung oder ein Nicht-Prepreg-Material verwendet wird, Einspritzen oder Eingießen der mindestens einen Imprägnierungsmatrix in die Gussform (3), um die Verstärkungsstruktur (2) zu imprägnierten, und derart, dass das Teil (1) aus Verbundmaterial die thermoplastische Folie (4) einschüeßt,
- (b6) als Nächstes, Verfestigen des sich ergebenden Teils (1) aus Verbundmaterial, indem das Teil der finalen Verfestigungstemperatur für eine festgelegte Zeit ausgesetzt wird,
- und (b7) Herausnehmen des Teils (1) aus Verbundmaterial, welches mit der funktionalen Deckschicht (8) versehen ist, aus der Gussform (3).

2. Verfahren nach Anspruch 1,
wobei eine zweite funktionale thermoplastische Folie (9) in der Gussform (3) platziert ist, bevor die Verstärkungsstruktur (2) angeordnet wird.

3. Verfahren nach einem der vorstehenden Ansprüche,
wobei die Erweichungstemperatur der funktionalen thermoplastischen Folie (4, 9) in dem Bereich von -50 °C bis 250 °C, vorzugsweise in dem Bereich von 80 °C bis 250 °C, und am meisten bevorzugt in dem Bereich von 120 °C bis 250 °C liegt.

4. Verfahren nach einem der vorstehenden Ansprüche,
wobei eine funktionale thermoplastische Folie (4, 9) Materialien, aus denen die Folie besteht, aufweist, die ausgewählt sind aus Materialien wie Polyimiden, Polyamiden oder aus Materialien, die fähig sind, sich in Caprolactam, Polysulfonen, Polyethersulfiden oder Polyetherimiden aufzulösen.

5. Verfahren nach einem der vorstehenden Ansprüche,
wobei eine funktionale thermoplastische Folie (4, 9) eine Dicke aufweist zwischen 0,02 mm und 1 mm, und vorzugsweise zwischen 0,02 mm und 0,4 mm, und meist bevorzugt zwischen 0,02 mm und 0,05 mm.

6. Verfahren nach einem der vorstehenden Ansprüche,
wobei die funktionale thermoplastische Folie (4, 9) an die Form des zukünftigen Teils (1) aus Verbundmaterial angepasst ist.

7. Verfahren nach einem der vorstehenden Ansprüche,
wobei Materialien, die Bestandteil der funktionalen thermoplastischen Folie (4) sind, mindestens ein Material umfassen, welches sich unter der Einwirkung von Wärme ausdehnt.

8. Verfahren nach einem der vorstehenden Ansprüche,
wobei Materialien, die Bestandteile der funktionalen thermoplastischen Folie (4, 9) sind, mindestens ein elektrisch leitendes Material und/oder mindestens ein nicht-entflammbares Material oder ein Entflammungsverzögerungsmaterial umfassen.

9. Verfahren nach einem der vorstehenden Ansprüche,
wobei die Verfestigungstemperatur einer Imprägnationsmatrix zwischen 120 °C und 400 °C, und vorzugsweise zwischen 120 °C und 330 °C, liegt.

10. Verfahren nach einem der vorstehenden Ansprüche,
wobei die Imprägnationsmatrix ein wärmeaushärtendes Harz ist, das ausgewählt ist aus einer Produktfamilie, die Epoxy-Verbindungen, Cyanatester oder Polyimide umfasst, und/oder wobei die Imprägnationsmatrix ein thermoplastisches Harzsystem ist, ausgewählt aus der Familie von Produkten, die Polyamide (anionisches Polyamid-6, PA11), Polyester (cyclisches PBT), Flüssigkristallpolymere, Polyketone oder Polysulfone umfasst.

11. Verfahren nach einem der vorstehenden Ansprüche,
**dadurch gekennzeichnet, dass** es darin besteht, die imprägnierte Verstärkungsstruktur (2) einem Vakuum oder einem Druck größer als der Atmosphärendruck während der finalen Verfestigungsstufe auszusetzen.

12. Verfahren nach einem der vorstehenden Ansprüche,
wobei die ausdehnbare, schweißbare, schlagunempfindliche, feuerbeständige, elektrisch leitende, wärmeübertragende, lackierbare und/oder ablösbare thermoplastische Folie (4, 9) mindestens zwei Schichten aus thermoplastischem Material und/oder aus koextrudiertem thermoplastischem Material aufweist, wobei die mindestens zwei Schichten mindestens eine obere Schicht in Kontakt mit der Verstärkung aufweist, die mindestens ein Material aufweist von Epoxy-Verbindungen, PSU, PPSU, PES, SRP, Polyimiden, Polyamiden, Poly(etherimid), PEI, Phenoxy-Verbindungen, Copolymeren und/oder Materialien, die fähig sind, sich in mindestens einem von Caprolactam (Polycaprolactam oder Polyamid), Epsilon-Caprolactam, Epoxy-Komponenten, bis-Maleimiden und deren Komponenten, Cyanatestern, Polyestern, Vinylestern, Benzoxazinen, Polysulfonen, Polyethersulfiden oder polyimid-basierten Harzsystemen und deren Bestandteilen zu lösen, und mindestens eine untere Schicht in Kontakt mit der Gussform, die mindestens enthält: PEEK, PPS, PEKK, selbstverstärkende Polymere oder eine Kombination davon.

13. Verfahren nach Anspruch 12, wobei mindestens ein elektrisch leitender Pfad in mindestens eine obere Schicht der thermoplastischen Folie (4, 9) eingebettet ist, sodass er im Wesentlichen an die Verstärkungsstruktur (2) angrenzt.

14. Verfahren nach Anspruch 1, wobei die thermoplastische Folie (4, 9) mindestens einen Energierichtungsgeber für Ultraschall-, Induktions-, Widerstands- und/oder Mikrowellenschweißen aufweist.

15. Verfahren nach Anspruch 12, wobei der mindestens eine Energierichtungsgeber in mindestens einer oberen Schicht oder in mindestens einer unteren Schicht der thermoplastischen Folie (4, 9) eingebettet ist.

## Revendications

1. Procédé de fabrication pour une pièce composite (1) pourvue d'une structure de renforcement (2) comprenant au moins une couche de renforcement à base d'armature en fibre, tissu ou textile ou d'armature pré-imprégnée et/ou de matériau pré-imprégné, dans lequel la structure de renforcement (2) est pourvue d'une couche de finition fonctionnelle comprenant une feuille thermoplastique extensible, soudable, résistante aux chocs, résistante au feu, électriquement conductrice, caloporteuse, pouvant être peinte et/ou détachable (4), ladite couche de finition fonctionnelle (8) étant intégralement formée sur au moins une des surfaces de ladite structure de renforcement (2), le procédé comprenant les étapes suivantes :
- (b1) utiliser un moule (3) dont la forme correspond à la future pièce composite (1),
- (b2) disposer la structure de renforcement (2) à l'intérieur du moule (3) et en recouvrant la structure de renforcement (2) avec la feuille thermoplastique extensible, soudable, résistante aux chocs, résistante au feu, électriquement conductrice, caloporteuse, pouvant être peinte et/ou détachable (4) ; le procédé étant **caractérisé en ce qu'**il comprend aussi :
- (b3) sceller le moule (3) au moyen de la feuille thermoplastique extensible, soudable, résistante aux chocs, résistante au feu, électriquement conductrice, caloporteuse, pouvant être peinte et/ou détachable (4),
- (b4) chauffer la structure de renforcement (2) jusqu'à atteindre la température d'injection/d'infusion d'au moins une matrice d'imprégnation, de manière à ce que la pièce composite (1) inclue la feuille thermoplastique (4) ;
- (b5) si une armature non-imprégnée ou un matériau non-pré-imprégné est utilisé, injecter ou infuser la ou les matrices d'imprégnation dans le moule (3) de manière à imprégner la structure de renforcement (2), et de manière à ce que la pièce composite (1) inclue la feuille thermoplastique (4) ;
- (b6) puis solidifier la pièce composite obtenue (1) en la soumettant à la température de solidification finale pendant un temps déterminé,
- et (b7) extraire du moule (3) la pièce composite (1) pourvue de la couche de finition fonctionnelle (8).

2. Procédé selon la revendication 1,
dans lequel une seconde feuille thermoplastique fonctionnelle (9) est placée dans le moule (3) avant de disposer la structure de renforcement (2).

3. Procédé selon l'une quelconque des revendications précédentes,
dans lequel la température de ramollissement de la feuille thermoplastique fonctionnelle (4, 9) se situe dans la plage de -50 °C à 250 °C, préférablement dans la plage de 80 °C à 250 °C et plus préférablement dans la plage de 120 °C à 250 °C.

4. Procédé selon l'une quelconque des revendications précédentes,
dans lequel une feuille thermoplastique fonctionnelle (4, 9) comprend certains matériaux constitutifs choisis parmi des matériaux tels que des polyimides, des polyamides ou des matériaux pouvant se dissoudre dans le caprolactame, les polysulfones, les sulfures de polyéther ou les polyéthérimides.

5. Procédé selon l'une quelconque des revendications précédentes, dans lequel une feuille thermoplastique fonctionnelle (4, 9) présente une épaisseur comprise entre 0,02 mm et 1 mm, préférablement entre 0,02 mm et 0,4 mm et plus préférablement entre 0,02 mm et 0,05 mm.

6. Procédé selon l'une quelconque des revendications précédentes, dans lequel la feuille thermoplastique fonctionnelle (4, 9) est formée selon la forme de la future pièce composite (1).

7. Procédé selon l'une quelconque des revendications précédentes, dans lequel les matériaux constituant la feuille thermoplastique fonctionnelle (4, 9) incluent au moins un matériau extensible sous l'effet de la chaleur.

8. Procédé selon l'une quelconque des revendications précédentes, dans lequel les matériaux constituant la feuille thermoplastique fonctionnelle (4, 9) comprennent au moins un matériau électriquement conducteur et/ou au moins un matériau non-inflammable ou ignifuge.

9. Procédé selon l'une quelconque des revendications précédentes, dans lequel la température de solidification d'une matrice d'imprégnation est comprise entre 120 °C et 400 °C et préférablement entre 120 °C et 330 °C.

10. Procédé selon l'une quelconque des revendications précédentes, dans lequel la matrice d'imprégnation est une résine thermodurcissable choisie parmi une famille de produits comprenant les époxydes, les esters de cyanate ou les polyimides et/ou la matrice d'imprégnation est un système de résine thermoplastique choisi parmi une famille de produits comprenant les polyamides (polyamide anionique 6, PA11), les polyesters (PBT cycliques), les polymères à cristaux liquides, les polycétones ou les polysulfones.

11. Procédé selon l'une quelconque des revendications précédentes, **caractérisé en ce qu'**il consiste à soumettre la structure de renforcement imprégnée (2) à un vide ou à une pression supérieure à la pression atmosphérique pendant l'étape de solidification finale.

12. Procédé selon l'une quelconque des revendications précédentes, dans lequel la feuille thermoplastique extensible, soudable, résistante aux chocs, résistante au feu, électriquement conductrice, caloporteuse, pouvant être peinte et/ou détachable (4, 9) comprend au moins deux couches de matériau thermoplastique et/ou de matériau thermoplastique co-extrudé, lesdites deux couches minimum comprenant au moins une couche supérieure en contact avec le renforcement et comprenant au moins un matériau de type époxyde, PSU, PPSU, PES, SRP, polyimides, polyamides, polyéthérimide PEI, phénoxyde, copolymères et/ou des matériaux pouvant se dissoudre dans au moins caprolactame (polycaprolactame ou polyamide), epsilon-caprolactame, composants epoxy, bismaléimides et leurs composants, esters de cyanate, polyesters, esters vinyliques, benzoxazines, polysulfones, sulfures de polyéther ou systèmes de résine à base de polyimide et leurs composants, et au moins une couche inférieure en contact avec le moule et comprenant au moins du PEEK, du PPS PEKK, des polymères auto-renforcés ou une combinaisons de ceux-ci.

13. Procédé selon la revendication 12, dans lequel le ou les conducteurs électriques sont noyés dans au moins une couche supérieure de la feuille thermoplastique (4, 9), de manière à ce qu'il aboute substantiellement la structure de renforcement (2)

14. Procédé selon la revendication 1, dans lequel la feuille thermoplastique (4, 9) comprend au moins un guide d'énergie pour le soudage aux ultrasons, par induction, par résistance et/ou par micro-ondes.

15. Procédé selon la revendication 12, dans lequel le ou les guides d'énergie sont noyés dans au moins une couche supérieure ou au moins une couche inférieure de la feuille thermoplastique (4,9).
